# EUROPEAN PATENT SPECIFICATION

(11) **EP 4 400 997 B1**
(45) Date of publication and mention of the grant of the patent: **20.05.2026**
(21) Application number: 24168167.5
(22) Date of filing: 03.04.2024
(51) Int. Cl.: G06F 21/62

(54) **TECHNIQUES FOR PROMOTING PRIVACY WHEN PROVIDING QUERY RESULTS**
TECHNIKEN ZUR FÖRDERUNG DER PRIVATSPHÄRE BEI DER BEREITSTELLUNG VON ABFRAGEERGEBNISSEN
TECHNIQUES POUR FAVORISER LA CONFIDENTIALITÉ LORS DE LA FOURNITURE DE RÉSULTATS DE REQUÊTE

(30) Priority: 04.03.2024 US 202463561251 P
(43) Date of publication of application: 17.07.2024
(73) Proprietor: Apple Inc., Cupertino, CA 95014 (US)
(72) Inventor: MARTYNOV, Maxim, Cupertino, CA, 95014 (US); KIRILLOV, Artem, Cupertino, CA, 95014 (US); MCMILLAN, Audra, Cupertino, CA, 95014 (US); ANTONOVA, Daniela S., Cupertino, CA, 95014 (US); BAE, Jae Hyeon, Cupertino, CA, 95014 (US); MOLAKALAPALLI, Mahesh, Cupertino, CA, 95014 (US); KISTNER, Nicholas, Cupertino, CA, 95014 (US)
(74) Representative: Lang, Johannes

(56) References cited:
- FRANCIS PAUL ET AL: "Diffix: High-Utility Database Anonymization", 11 October 2017, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 141 - 158, ISBN: 978-3-540-74549-5, XP047450110
- PAUL FRANCIS ET AL: "Diffix-Birch: Extending Diffix-Aspen", ARXIV.ORG, CORNELL UNIVERSITY LIBRARY, 201 OLIN LIBRARY CORNELL UNIVERSITY ITHACA, NY 14853, 6 June 2018 (2018-06-06), XP081467110
- KRISHNARAM KENTHAPADI ET AL: "PriPeARL: A Framework for Privacy-Preserving Analytics and Reporting at LinkedIn", ARXIV.ORG, CORNELL UNIVERSITY LIBRARY, 201 OLIN LIBRARY CORNELL UNIVERSITY ITHACA, NY 14853, 20 September 2018 (2018-09-20), XP081193625, DOI: 10.1145/3269206.3272031

## Description

### FIELD

The described embodiments relate generally to providing query results in response to queries. More particularly, the described embodiments provide techniques for promoting privacy when providing the query results according to the features of the independent claims.

### BACKGROUND

Privacy protection stands as a significant challenge in the modern-day landscape of data-driven activities. In particular, as data collection and analysis methods become more advanced, there is a growing importance to establish a reasonable balance between the benefits of data utilization and the protection of individuals' privacy rights. One effective strategy in achieving this balance is the addition of noise to data, which is a practice that has been employed across various sectors to, at least to some degree, safeguard sensitive information while maintaining data utility.

The necessity to add noise to data can arise from the need to anonymize or obfuscate sensitive information contained within datasets. For example, healthcare records, financial transactions, and social science surveys often include personal details such as medical histories, financial transactions, and demographic information, respectively, such that it can be desirable to implement privacy measures. By injecting controlled noise into datasets, the original data's statistical properties can remain largely intact-with individual-level details becoming largely obscured-thereby making it significantly more challenging for malicious parties to identify specific individuals (while preserving the overall usefulness of the datasets).

Importantly, while noise addition techniques can offer some level of privacy protection, they are not immune to potential vulnerabilities. In particular, current implementations of noise addition, particularly those using simple randomization or fixed perturbation methods, can be susceptible to reverse engineering attacks. In this regard, sophisticated adversaries can potentially exploit patterns in the noise, combine multiple datasets to infer sensitive information, and so on, to effectively glean information that can compromise individuals' privacy despite the added noise. For example, generating random noise for repeated queries / query results can, in some cases, enable a malicious entity to average the noise and thereby circumvent the intended protections.

Accordingly, what is needed are improved techniques for providing relevant query results to users in response to their queries.
FRANCIS PAUL ET AL: "Diffix: High-Utility Database Anonymization", discloses the design of Diffix which acts as an SQL proxy between the analyst and an unmodified live database. Diffix adds a minimal amount of noise to answers-Gaussian with a standard deviation of only two for counting queries-and places no limit on the number of queries an analyst may make.
PAUL FRANCIS ET AL: "Diffix-Birch: Extending Diffix-Aspen" discloses diffix-birch which extends the description of diffix-aspen to include a wide variety of common features found in SQL, wherein attacks associated with various features, and the anonymization steps used to defend against those attacks are described.

### SUMMARY

The present invention is defined by the features of the independent claim(s). Preferred advantageous embodiments thereof are defined by the sub-features of the dependent claims. Any reference to "embodiment(s)", "example(s)" or "aspect(s) of the invention" in this description not falling under the scope of the claims should be interpreted as illustrative example(s) for understanding the invention.

The described embodiments relate generally to providing query results in response to queries. More particularly, the described embodiments provide techniques for promoting privacy when providing the query results.

One embodiment sets forth a method for promoting privacy when providing query results. According to some embodiments, the method can be implemented by a computing device, and includes the steps of (1) receiving at least one query that includes (i) a unique identifier (ID) associated with a software application, (ii) a date, and (iii) at least one parameter, (2) generating query results based on the query, where the query results include one or more records, (3) obtaining a random seed value based on the unique ID and the date, (4) generating, for each record of the one or more records, a respective hash value based on (i) the unique ID, (ii) the random seed value, and (iii) at least one aspect of the record, (5) generating respective noise values for the respective hash values, (6) adjusting each record of the one or more records based at least in part on the respective noise value to produce a corresponding adjusted record, and (7) causing information based at least in part on the one or more corresponding adjusted records to be included in a user interface (UI) that is output on a display device.

According to some embodiments, obtaining the random seed value based on the unique ID and the date comprises: (1) identifying a respective collection of random seed values that corresponds to the date, (2) assigning the unique ID of the software application to a dividend value, (3) assigning a number of random seed values in the respective collection of random seed values to a divisor value, and (4) performing a modulo operation on the dividend and divisor values, where a remainder of the modulo operation corresponds to a position of the random seed value relative to other random seed values in the respective collection of random seed values.

According to some embodiments, for a given record of the one or more records, the at least one aspect includes: (1) a metric name that corresponds to the record, (2) a date value that corresponds to the record, (3) a period value that corresponds to the record, (4) a grouping set value that corresponds to the record, or (5) some combination thereof.

According to some embodiments, generating a given respective noise value for a given respective hash value comprises: (1) generating a random value based on (i) the given respective hash value, and (ii) a personalization value that is based at least in part on the unique ID, and (2) utilizing the random value to obtain the given respective noise value.

According to some embodiments, the given respective hash value is a uniformly distributed random value, the random value is a normalized random value, and the given respective noise value is a Gaussian distribution value (e.g., discrete, continuous, etc.).

According to some embodiments, the given respective hash value is generated using a SHA-256 hash function, the random value is generated using a SHA-256 hash function (or alternative hash function), and the Gaussian distribution value is based on a mean of zero and a standard deviation of two.

According to some embodiments, adjusting a given record of the one or more records based at least in part on the respective noise value to produce the corresponding adjusted record comprises: performing at least one operation on the given record based at least in part on the respective noise value and a type of the given record.

Other embodiments include a non-transitory computer readable storage medium configured to store instructions that, when executed by a processor included in a computing device, cause the computing device to carry out the various steps of any of the foregoing methods. Further embodiments include a computing device that is configured to carry out the various steps of any of the foregoing methods.

Other aspects and advantages of the embodiments described herein will become apparent from the following detailed description taken in conjunction with the accompanying drawings which illustrate, by way of example, the principles of the described embodiments.

### BRIEF DESCRIPTION OF THE DRAWINGS

The included drawings are for illustrative purposes and serve only to provide examples of possible structures and arrangements for the disclosed inventive apparatuses and methods for providing wireless computing devices. These drawings in no way limit any changes in form and detail that may be made to the embodiments by one skilled in the. The embodiments will be readily understood by the following detailed description in conjunction with the accompanying drawings, wherein like reference numerals designate like structural elements.
FIG. 1 illustrates a block diagram of different components of a system that can be configured to implement the various techniques described herein, according to some embodiments.
FIG. 2 illustrates a conceptual diagram that illustrates distinctions between noised and non-noised records displayed within table-based user interfaces, according to some embodiments
FIG. 3 illustrates a conceptual diagram that illustrates distinctions between noised and non-noised records displayed within a dashboard-based user interface, according to some embodiments
FIG. 4 illustrates a method for promoting privacy when providing query results, according to some embodiments
FIG. 5 illustrates a detailed view of a computing device that can be used to implement the various components described herein, according to some embodiments.

### DETAILED DESCRIPTION

Representative applications of apparatuses and methods according to the presently described embodiments are provided in this section. These examples are being provided solely to add context and aid in the understanding of the described embodiments. It will thus be apparent to one skilled in the art that the presently described embodiments can be practiced without some or all of these specific details. In other instances, well known process steps have not been described in detail in order to avoid unnecessarily obscuring the presently described embodiments. Other applications are possible, such that the following examples should not be taken as limiting.

The described embodiments relate generally to providing query results in response to queries. More particularly, the described embodiments provide techniques for promoting privacy when providing the query results.

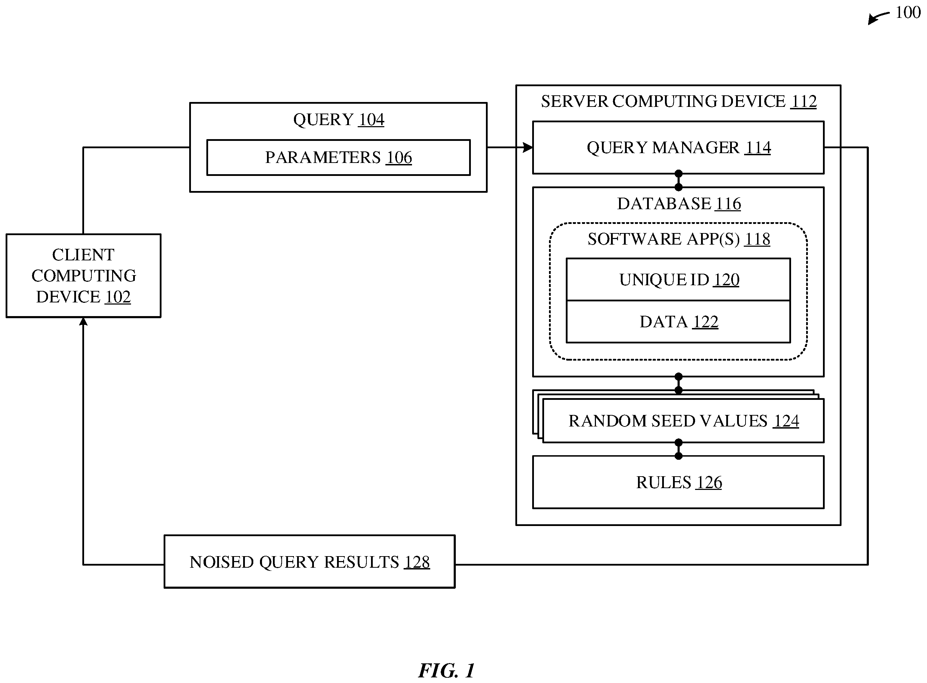

FIG. 1 illustrates a block diagram of different components of a system 100 that can be configured to implement the various techniques described herein, according to some embodiments. As shown in FIG. 1, the system 100 can include a client computing device 102 and a server computing device 112. It is noted that, in the interest of simplifying this disclosure, the client computing device 102 and the server computing device 112 are typically discussed in singular capacities. In that regard, it should be appreciated that the system 100 can include any number of client computing devices 102 and server computing devices 108, without departing from the scope of this disclosure.

According to some embodiments, the client computing device 102 and the server computing device 112 can represent any form of computing device operated by an individual, an entity, etc., such as a wearable computing device, a smartphone computing device, a tablet computing device, a laptop computing device, a desktop computing device, a gaming computing device, a smart home computing device, an Internet of Things (IOT) computing device, a rack mount computing device, and so on. It is noted that the foregoing examples are not meant to be limiting, and that the client computing device 102 / server computing device 112 can represent any type, form, etc., of computing device, without departing from the scope of this disclosure.

Under an example scenario, the server computing device 112 can implement (or can communicate with other computing devices that implement) an online software application store (also referred to herein as an "App Store") that manages software applications 118 and the distribution thereof onto computing devices. In this regard, the server computing device 112 can be configured to maintain information pertaining to the utilization, distribution, advertisement, etc., of the software applications 118. In this vein, the client computing device 102 can represent a software development, management, etc., entity that is associated with software applications 118, and that is seeking to access information associated with the software applications 118 that is managed by, accessible to, etc., the server computing device 112. According to some embodiments, the client computing device 102 can be associated with (i.e., logged into) a user account (not illustrated in FIG. 1) that is known to the server computing device 112, where the user account enables the client computing device 102 to access, interact with, etc., the aforementioned information.

As shown in FIG. 1, the server computing device 112 can implement a query manager 114 that is configured to receive, process, and respond to queries 104 issued by the client computing device 102 (e.g., via the Internet). According to some embodiments, and as shown in FIG. 1, a given query 104 can include one or more parameters 106 that are interpreted by the query manager 114 to provide query results (also referred to herein as "records"). The parameters 106 can include any amount, type, form, etc., of information, at any level of granularity, consistent with the scope of this disclosure.

As shown in FIG. 1, the server computing device 112 can manage, access, etc., a database 116 (e.g., stored on one or more local storage devices, one or more network storage devices, one or more cloud-based storages, etc.). According to some embodiments, the database 116 can manage data 122 for software applications 118, where each software application 118 is associated with a unique identifier 120. The data 122 for a given software application 118 can include any information related to the advertisement, distribution, utilization, etc., of the software application 118. It is noted that the foregoing examples are not meant to be limiting, and that the data 122 for a given software application 118 can include any amount, type, form, etc., of information, at any level of granularity, consistent with the scope of this disclosure.

Accordingly, the query manager 114 can receive queries 104 from the client computing device 102, interface with the database 116 to obtain information based on the parameters 106, process the information (where necessary), and return query results to the client computing device 102. According to some embodiments, the query results can be organized, formatted, etc., in a manner that is understood by the client computing device 102. In turn, the client computing device 102 can display the query results using the appropriate applications, user interfaces, etc., to enable a user of the client computing device 102 to interact with the query results.

As described herein, malicious entities can, in some cases, effectively glean private information about sensitive aspects of the software application 118 (even when the aforementioned query results do not directly include such sensitive information). Such sensitive information can include, for example, user-specific information, device-specific information, and so on. In this regard, it can be beneficial to add noise to the aforementioned query results (illustrated in FIG. 1 as noised query results 128) in the interest of promoting privacy.

In order to effectively provide noised query results 128, the query manager 114 can manage one or more collections of random seed values 124. According to some embodiments, each collection of random seed values 124 can correspond to a period of time (e.g., a week, a month, a year). In this vein, a new collection of random seed values 124 can be generated when appropriate, e.g., at the start of a new period of time. For example, if a collection of random seed values 124 is generated on a monthly basis, then a new collection of random seed values 124 can be generated and added on the first day of each month (where previous collections of random seed values 124 are preserved). It is noted that the foregoing examples are not meant to be limiting, and that any number of collections of random seed values 124 can be managed, and that the collections of random seed values 124 can include any number of random seed values 124, and can be generated on any periodic, conditional, etc., basis, at any level of granularity, consistent with the scope of this disclosure.

According to some embodiments, each random seed value 124 (in a given collection of random seed values 124) can represent a large entropy (e.g., a two-hundred fifty-six (256) bit) number, which can be generated using a cryptographically secure hash function (e.g., SHA-256). It is noted that the foregoing examples are not meant to be limiting, and that the random seed value 124 can represent any type, size, form, etc., of random seed value, and can be generated using any function, consistent with the scope of this disclosure. According to some embodiments, each random seed value 124 (in a given collection of random seed values 124) can be assigned an identifier (not illustrated in FIG. 1) that represents the position of random seed value 124 relative to other random seed values 124 in the given collection of random seed values 124. For example, a first random seed value 124 can take on the identifier "1", a second random seed value 124 can take on the identifier "2", and so on. It is noted that the foregoing examples are not meant to be limiting, and that the random seed values 124 can be assigned any type, form, etc., of identifier, at any level of granularity, consistent with the scope of this disclosure.

According to some embodiments, when a query 104 is received, the parameters 106 can include a unique identifier 120 (of a software application 118 in which a user is interested in obtaining information therefor), a date (e.g., a relevant date, date range, etc., that corresponds to the information being sought), and any other parameters that inform the query manager 114 about the records that should be obtained, generated, and so on. The query manager 114 can then interface with the database 116 to establish one or more (non-noised) records.

When the records have been obtained, the query manager 114 can implement techniques that add noise to the records. In particular, the query manager 114 can identify the collection of random seed values 124 that corresponds to the date provided in the query 104. For example, if the date specifies January 1^{st}, 2024, then the query manager 114 can identify the collection of random seed values 124 that corresponds to the month of January in 2024 (e.g., when collections of random seed values 124 are generated on a monthly basis). In another example, if the date specifies a range (e.g., February 1^{st}, 2024 through February 15^{th}, 2024), then the query manager 114 can identify the collection of random seed values 124 that corresponds to the starting date of the range (i.e., February 1^{st}, 2024). It is noted that the foregoing examples are not meant to be limiting, and that collections of random seed values 124 can be managed, identified, etc., in accordance with any amount, type, form, etc., of information, at any level of granularity, consistent with the scope of this disclosure.

Next, the query manager 114 identifies the random seed value 124 (within the identified collection of random seed values 124) that corresponds to the unique identifier 120. To identify the random seed value 124, the query manager 114 (1) assigns the unique identifier 120 of the software application-e.g., "23382907532"- to a dividend value, and (2) assigns a number of random seed values 124 in the collection of random seed values 124-e.g., "1000"-to a divisor value. In turn, the query manager 114 performs a modulo operation on the dividend value ("23382907532") and the divisor value ("1000"), to obtain a remainder value (i.e., 23382907532 % 1000 = 532), where the remainder value ("532") corresponds to the position of the random seed value 124 relative to other random seed values 124 (in the collection of random seed values 124). It is noted that the foregoing examples are not meant to be limiting, and that queries 104 can be mapped to random seed values 124 using any, type, form, etc., of approach, at any level of granularity, consistent with the scope of this disclosure. In any case, the random seed value 124 can then be obtained from the collection of random seed values 124.

When the random seed value 124 is obtained, the query manager 114 can generate, for each record of the one or more records (initially gathered in accordance with the query 104), a respective hash value based on (1) the unique identifier 120 (included in the query 104), (2) the random seed value 124, and (3) at least one aspect of the record. According to some embodiments, the at least one aspect can include a metric name that corresponds to the record (e.g., advertisement, distribution, utilization, etc., metrics associated with the software applications 118), a date value that corresponds to the record (e.g., a starting date, a date range, etc.), a period value that corresponds to the record (e.g., a reporting period), a grouping set value that corresponds to the record (e.g., specification(s) of grouped columns used to aggregate data), and the like. It is noted that the foregoing examples are not meant to be limiting, and that the aforementioned aspects can include any amount, type, form, etc., of information associated with, relevant to, etc., a given record, at any level of granularity, consistent with the scope of this disclosure.

According to some embodiments, to generate a respective hash value for a given record, the aforementioned (1) unique identifier 120, (2) random seed value 124, and (3) at least one aspect of the record can be provided to a cryptographically secure hash function (e.g., SHA-256), which then outputs the respective hash value. Again, other hash functions can be utilized to generate hash values for records without departing from the scope of this disclosure. For example, the hash function can be selected (e.g., from a collection of available / distinct hash functions) based on the aforementioned (1) unique identifier 120, (2) random seed value 124, and (3) at least one aspect of the record, such that one or more hash functions can be utilized to generate the respective hash values for a set of records. It is noted that the foregoing examples are not meant to be limiting, and that any number, type, form, etc., of hash function(s) can be utilized to generate hash values for records, consistent with the scope of this disclosure.

According to some embodiments, the hash values output by the aforementioned hash function are uniformly-distributed random values, meaning they are equally capable of taking on a value of zero to the maximum value that can be output by the utilized hash function. Notably, given a hash value (i.e., a hash function output) is produced using a random initial seed value (and, in some cases, other values), the hash value is also a random number that cannot be predicted or recovered without knowing the random initial seed value (and other values, when utilized).

It can be beneficial to effectively establish normalized random values (i.e., values following a uniform distribution) to be used to perform noising adjustments to the records that are based at least in part on the hash values. To implement this approach, the query manager 114 can, for a given hash value, generate a normalized random value based on (i) the given hash value-and, optionally, (ii) a personalization value that is based at least in part on the unique ID (and/or any other information). The normalized random value can be generated, for example, using one or more random number generators that receive the hash value (and other optional parameters) as input(s), and then output the normalized random value. According to some embodiments, the one or more random number generators can be deterministic, such that the same input value(s) always result in the same output value. It is noted that the foregoing examples are not meant to be limiting, and that a given normalized random value can be based on any amount, type, form, etc., of information, at any level of granularity, and can be based on any number, type, form, etc., of functions, consistent with the scope of this disclosure.

When the query manager 114 has generated respective normalized random values for the records, the query manager 114 generates respective noise values to be used to adjust the corresponding records. According to some embodiments, the query manager 114 utilizes a given normalized random value as a basis for obtaining a corresponding Gaussian distribution value (e.g., discrete, continuous, etc.) that conforms with particular parameters (e.g., a mean of zero (0), a standard deviation of two (2), etc.), where the Gaussian distribution value effectively functions as the respective noise value. For example, a corresponding Gaussian distribution value can be obtained by passing a given normalized random value through an inverse cumulative distribution function of the desired noise distribution. In some cases, the Gaussian distribution value can also be adjusted, based on, etc., any aspect of the record (and/or other information) to which the Gaussian distribution value will be utilized to apply noise. The Gaussian distribution value can also be adjusted based on one or more rules 126, which are described below in greater detail. It is noted that any number of approaches can be utilized to obtain a Gaussian distribution value based on a given normalized random value, without departing from the scope of this disclosure.

Additionally, and according to some embodiments, the query manager 114 can reference a set of rules 126 that can influence how the respective noise values are applied to the records, how the records are adjusted (e.g., independent from the noise values, or in addition thereto), and so on. For example, one or more rules 126 can promote crowd anonymity interests, e.g., for records having identifying records (e.g., operating system (OS) versions, platform versions, etc.), such that if the software application 118 has not been used on a given day, week, month, etc., by five (5) distinct devices, information for those records will be empty. In another example, one or more rules 126 can apply to daily, weekly, monthly, etc., records that constitute aggregations of sensitive information (e.g., a sessions report that identifies a number of unique devices, a number of sessions, total session duration, etc.). In yet another example, one or more rules 126 can apply to money-based records (individual, aggregated, etc.), given such values are typically constituted from discrete price amounts. It is noted that the foregoing examples are not meant to be limiting, and that the rules 126 can include any amount, type, form, etc., of rules, at any level of granularity, consistent with the scope of this disclosure.

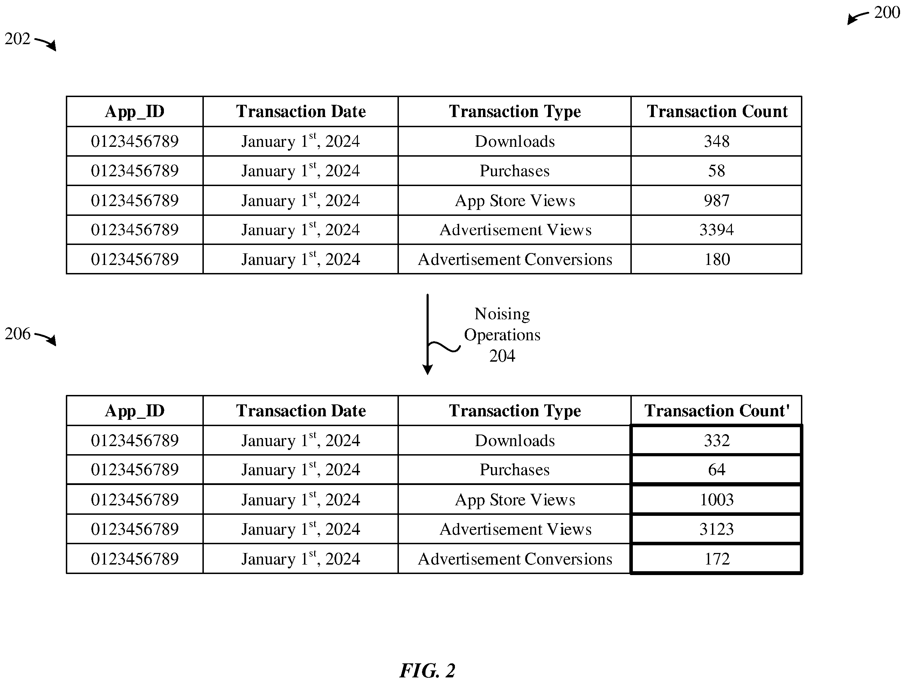

In any case, when the noise values / records have been effectively obtained, adjusted, etc., in accordance with the techniques described herein, the query manager 114 can adjust each record in accordance with its respective noise value. When the query manager 114 has completed adding noise to the records, the query manager 114 can package the noised records (illustrated in FIG. 1 as noised query results 128) and provide the noised query results 128 to the client computing device 102 (that issued the query 104), and/or to any other devices that should receive the noised query results 128. In turn, the client computing device 102 (and/or other devices) can cause information based at least in part on the noised query results 128 to be displayed in a user interface (UI) that is output on a display device. Examples of such user interfaces are illustrated in FIGS. 2-3 and discussed below in greater detail.

It is noted that the logical breakdown of the entities illustrated in FIG. 1-as well as the logical flow of the manner in which such entities communicate-should not be construed as limiting. On the contrary, any of the entities illustrated in FIG. 1 can be separated into additional entities within the system 100, combined together within the system 100, or removed from the system 100, without departing from the scope of this disclosure. It is additionally noted that, in the interest of unifying and simplifying this disclosure, the described embodiments primarily pertain to managing data associated with software applications 118. However, it should be appreciated that the embodiments disclosed herein can be implemented to receive queries 104-and to provide noised query results 128-for any type, amount, form, etc., of information, at any level of granularity, consistent with the scope of this disclosure. For example, the unique identifiers 120 described herein can instead represent report identifiers, data set identifiers, and so on, consistent with the scope of this disclosure.

Additionally, it should be understood that the various components of the computing devices illustrated in FIG. 1 are presented at a high level in the interest of simplification. For example, although not illustrated in FIG. 1, it should be appreciated that the various computing devices can include common hardware / software components that enable the above-described software entities to be implemented. For example, each of the computing devices can include one or more processors that, in conjunction with one or more volatile memories (e.g., a dynamic random-access memory (DRAM)) and one or more storage devices (e.g., hard drives, solid-state drives (SSDs), etc.), enable the various software entities described herein to be executed. Moreover, each of the computing devices can include communications components that enable the computing devices to transmit information between one another.

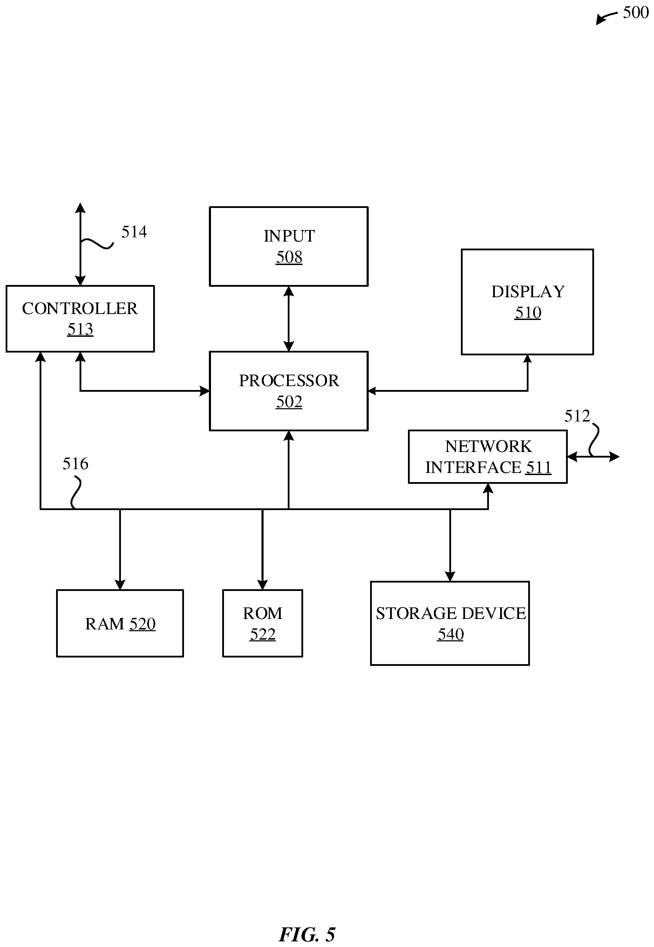

A more detailed explanation of these hardware components is provided below in conjunction with FIG. 5. It should additionally be understood that the computing devices can include other entities that enable the implementation of the various techniques described herein, without departing from the scope of this disclosure. It should additionally be understood that the entities described herein can be combined or split into additional entities, without departing from the scope of this disclosure. It should further be understood that the various entities described herein can be implemented using software-based or hardware-based approaches, without departing from the scope of this disclosure.

Accordingly, FIG. 1 provides an overview of the manner in which the system 100 can implement the various techniques described herein, according to some embodiments. A more detailed breakdown of the manner in which these techniques can be implemented will now be provided below in conjunction with FIGS. 2-5.

FIG. 2 illustrates a conceptual diagram 200 that illustrates distinctions between noised and non-noised records displayed within table-based user interfaces, according to some embodiments. In particular, a table 202 includes non-noised records that otherwise would be returned by the query manager 114 (in response to a query 104) if the noising techniques described herein were not applied. Conversely, a table 206 includes noised records (produced by performing noising operations 204 against at least some of the non-noised records included in the table 202, in accordance with the techniques described herein). As shown in FIG. 2, the Transaction Count values are adjusted in accordance with the noising techniques, thereby obfuscating the information to some degree, and promoting privacy interests.

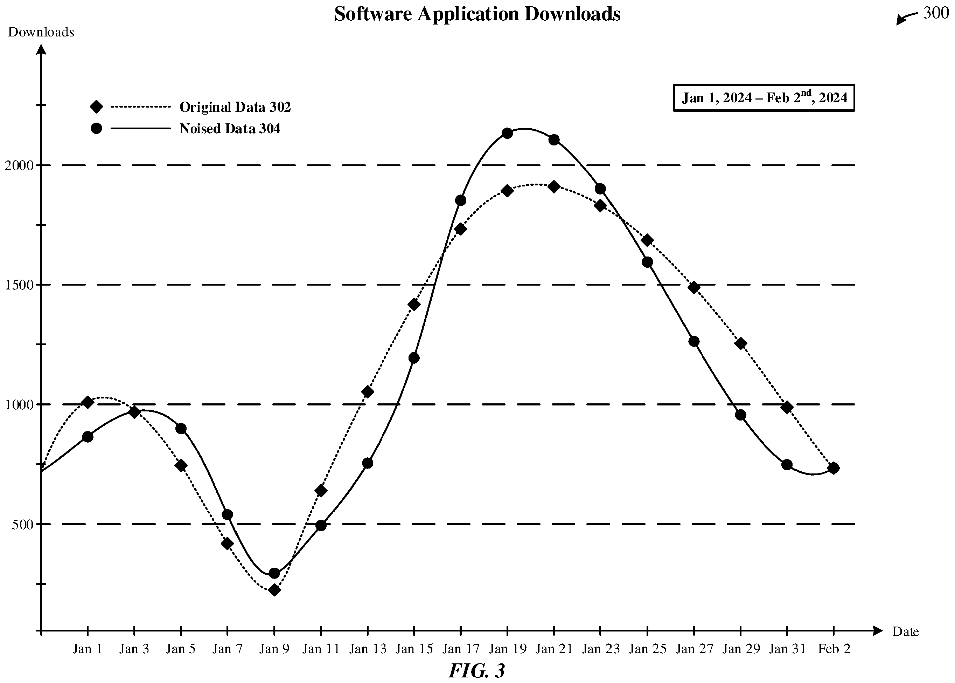

FIG. 3 illustrates a conceptual diagram 300 that illustrates distinctions between noised and non-noised records displayed within a dashboard-based user interface, according to some embodiments. In particular, and as shown in FIG. 3, original data 302 is shown, which represents non-noised records that otherwise would be returned by the query manager 114 (in response to a query 104) if the noising techniques described herein were not applied. Conversely, the noised data 304 is shown, which represents noised records (produced by performing noising operations against the original data 302, in accordance with the techniques described herein). As shown in FIG. 3, at least some of the Software Application Download count values are adjusted in accordance with the noising techniques, thereby obfuscating the information to some degree, and promoting privacy interests.

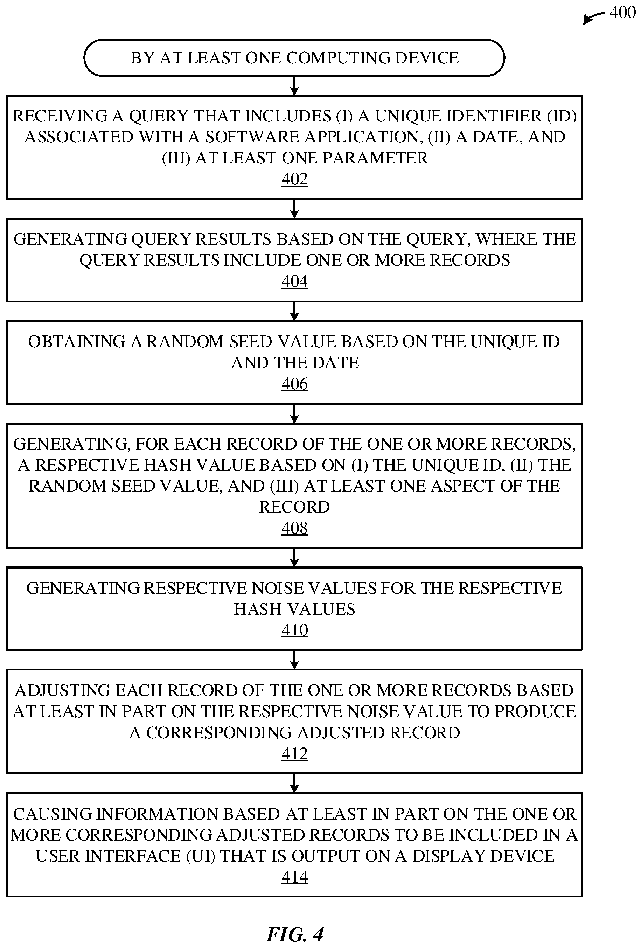

FIG. 4 illustrates a method 400 for promoting privacy when providing query results, according to some embodiments. As shown in FIG. 4, the method 400 begins at step 402, where the server computing device 112 receives at least one query that includes (i) a unique identifier (ID) associated with a software application, (ii) a date, and (iii) at least one parameter (e.g., as described above in conjunction with FIG. 1).

At step 404, the server computing device 112 generates query results based on the query, where the query results include one or more records (e.g., as described above in conjunction with FIG. 1). At step 406, the server computing device 112 obtains a random seed value based on the unique id and the date (e.g., as described above in conjunction with FIG. 1).

At step 408, the server computing device 112 generates, for each record of the one or more records, a respective hash value based on (i) the unique ID, (ii) the random seed value, and (iii) at least one aspect of the record (e.g., as described above in conjunction with FIG. 1). At step 410, the server computing device 112 generates respective noise values for the respective hash values (e.g., as described above in conjunction with FIG. 1).

At step 412, the server computing device 112 adjusts each record of the one or more records based at least in part on the respective noise value to produce a corresponding adjusted record (e.g., as described above in conjunction with FIG. 1). At step 414, the server computing device 112 causes information based at least in part on the one or more corresponding adjusted records to be included in a user interface (UI) that is output on a display device (e.g., as described above in conjunction with FIG. 1).

FIG. 5 illustrates a detailed view of a computing device 500 that can be used to implement the various components described herein, according to some embodiments. In particular, the detailed view illustrates various components that can be included in the client computing device 102, the server computing device 112, and so on, described above in conjunction with FIG. 1.

As shown in FIG. 5, the computing device 500 can include a processor 502 that represents a microprocessor or controller for controlling the overall operation of computing device 500. The computing device 500 can also include a user input device 508 that allows a user of the computing device 500 to interact with the computing device 500. For example, the user input device 508 can take a variety of forms, such as a button, keypad, dial, touch screen, audio input interface, visual/image capture input interface, input in the form of sensor data, etc. Furthermore, the computing device 500 can include a display 510 (screen display) that can be controlled by the processor 502 to display information to the user. A data bus 516 can facilitate data transfer between at least a storage device 540, the processor 502, and a controller 513. The controller 513 can be used to interface with and control different equipment through an equipment control bus 514. The computing device 500 can also include a network/bus interface 511 that couples to a data link 512. In the case of a wireless connection, the network/bus interface 511 can include a wireless transceiver.

The computing device 500 also includes a storage device 540, which can comprise a single disk or a plurality of disks (e.g., SSDs), and includes a storage management module that manages one or more partitions within the storage device 540. In some embodiments, storage device 540 can include flash memory, semiconductor (solid state) memory or the like. The computing device 500 can also include a Random-Access Memory (RAM) 520 and a Read-Only Memory (ROM) 522. The ROM 522 can store programs, utilities, or processes to be executed in a non-volatile manner. The RAM 520 can provide volatile data storage, and stores instructions related to the operation of the computing devices described herein.

The various aspects, embodiments, implementations, or features of the described embodiments can be used separately or in any combination. Various aspects of the described embodiments can be implemented by software, hardware or a combination of hardware and software. The described embodiments can also be embodied as computer readable code on a computer readable medium. The computer readable medium is any data storage device that can store data that can be read by a computer system. Examples of the computer readable medium include read-only memory, random-access memory, CD-ROMs, DVDs, magnetic tape, hard disk drives, solid state drives, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the described embodiments. Thus, the foregoing descriptions of specific embodiments are presented for purposes of illustration and description. They are not intended to be exhaustive or to limit the described embodiments to the precise forms disclosed. It will be apparent to one of ordinary skill in the art that many modifications and variations are possible in view of the above teachings.

As described herein, one aspect of the present technology is the gathering and use of data available from various sources to improve user experiences. The present disclosure contemplates that in some instances, this gathered data may include personal information data that uniquely identifies or can be used to contact or locate a specific person. Such personal information data can include demographics data, location-based data, telephone numbers, email addresses, home addresses, data or records relating to a user's health or level of fitness (e.g., vital signs measurements, medication information, exercise information), date of birth, smart home activity, or any other identifying or personal information. The present disclosure recognizes that the use of such personal information data, in the present technology, can be used to the benefit of users.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, the present technology can be configured to allow users to select to "opt in" or "opt out" of participation in the collection of personal information data during registration for services or anytime thereafter. In another example, users can select to provide only certain types of data that contribute to the techniques described herein. In addition to providing "opt in" and "opt out" options, the present disclosure contemplates providing notifications relating to the access or use of personal information. For instance, a user may be notified that their personal information data may be accessed and then reminded again just before personal information data is accessed.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

As used in the description above and the claims below, the phrases "at least one of A, B, or C" and "one or more of A, B, or C" include A alone, B alone, C alone, a combination of A and B, a combination of B and C, a combination of A and C, and a combination of A, B, and C. That is, the phrases "at least one of A, B, or C" and "one or more of A, B, or C" means A, B, C, or any combination thereof, such that one or more of a group of elements consisting of A, B and C, and should not be interpreted as requiring at least one of each of the listed elements A, B and C, regardless of whether A, B and C are related as categories or otherwise. Furthermore, the use of the article "a" or "the" in introducing an element should not be interpreted as being exclusive of a plurality of elements. Also, the recitation of "A, B, and/or C" is equal to "at least one of A, B, or C." Also, the use of "a" refers to "one or more" in the present disclosure. For example, "an application" refers to "one application" or "a group of applications."

## Claims

1. A method (400) for promoting privacy when providing query results, the method comprising, by a computing device:
receiving (402) at least one query that includes (i) a unique identifier (ID) associated with a software application, (ii) a date, and (iii) at least one parameter;
generating (404) query results based on the query, wherein the query results include one or more records;
adding a new collection of random seed values to an existing plurality of collections of random seed values at a start of a date range, whereby each collection corresponds to a date range;
selecting a particular collection of random seed values of the plurality of collections of random seed values, the date range of which corresponds to the date provided in the query; obtaining (406) a random seed value from the selected particular collection of random seed values that corresponds with the unique ID;
generating (408), for each of the one or more records, a respective hash value based on (i) the unique ID, (ii) the random seed value, and (iii) at least one aspect of the record;
generating (410) respective noise values for the respective hash values;
adjusting (412) each record of the one or more records based at least in part on the respective noise value to produce a corresponding adjusted record; and
causing (414) information based at least in part on the one or more corresponding adjusted records to be included in a user interface (UI) that is output on a display device.

2. The method of claim 1, wherein obtaining the random seed value comprises:
assigning the unique ID of the software application to a dividend value;
assigning a number of random seed values in the particular collection of random seed values to a divisor value; and
performing a modulo operation on the dividend value and divisor value, wherein a remainder of the modulo operation corresponds to a position of the random seed value relative to other random seed values in the particular collection of random seed values.

3. The method of claim 1, wherein, for a given record of the one or more records, the at least one aspect includes:
a metric name that corresponds to the given record;
a date value that corresponds to the given record;
a period value that corresponds to the given record;
a grouping set value that corresponds to the given record; or
some combination thereof.

4. The method of claim 1, wherein generating a given respective noise value for a given respective hash value comprises:
generating a random value based on (i) the given respective hash value, and (ii) a personalization value that is based at least in part on the unique ID; and
utilizing the random value to obtain the given respective noise value.

5. The method of claim 4, wherein:
the given respective hash value is a uniformly distributed random value;
the random value is a normalized random value; and
the given respective noise value is a Gaussian distribution value.

6. The method of claim 5, wherein:
the given respective hash value is generated using a SHA-256 hash function;
the random value is generated using a SHA-256 hash function; and
the Gaussian distribution value is based on a mean of zero and a standard deviation of two.

7. The method of claim 1, wherein adjusting a given record of the one or more records based at least in part on the respective noise value to produce the corresponding adjusted record comprises:
performing at least one operation on the given record based at least in part on the respective noise value and a type of the given record.

8. A computing device (500) configured to promote privacy when providing query results, the computing device comprising:
at least one processor (502); and
at least one memory storing instructions that, when executed by the at least one processor, cause the computing device to carry out steps that include:
receiving at least one query that includes (i) a unique identifier (ID) associated with a software application, (ii) a date, and (iii) at least one parameter;
generating query results based on the query, wherein the query results include one or more records;
adding a new collection of random seed values to an existing plurality of collections of random seed values at a start of a date range, whereby each collection corresponds to a date range;
selecting a particular collection of random seed values of the plurality of collections of random seed values, the date range of which corresponds to the date provided in the query;
obtaining a random seed value from the selected particular collection of random seed values that corresponds with the unique ID;
generating, for each of the one or more records, a respective hash value based on (i) the unique ID, (ii) the random seed value, and (iii) at least one aspect of the record;
generating respective noise values for the respective hash value;
adjusting each record of the one or more records based at least in part on the respective noise value to produce a corresponding adjusted record; and
causing information based at least in part on the one or more corresponding adjusted records to be included in a user interface (UI) that is output on a display device.

9. The computing device of claim 8, wherein obtaining the random seed value comprises:
identifying a respective collection of random seed values that corresponds to the date;
assigning the unique ID of the software application to a dividend value;
assigning a number of random seed values in the respective collection of random seed values to a divisor value; and
performing a modulo operation on the dividend value and the divisor value, wherein a remainder of the modulo operation corresponds to a position of the random seed value relative to other random seed values in the particular collection of random seed values.

10. The computing device of claim 8, wherein, for a given record of the one or more records, the at least one aspect includes:
a metric name that corresponds to the given record;
a date value that corresponds to the given record;
a period value that corresponds to the given record;
a grouping set value that corresponds to the given record; or
some combination thereof.

11. The computing device of claim 8, wherein generating a given respective noise value for a given respective hash value comprises:
generating a random value based on (i) the given respective hash value, and (ii) a personalization
value that is based at least in part on the unique ID; and
utilizing the random value to obtain the given respective noise value.

12. The computing device of claim 11, wherein:
the given respective hash value is a uniformly distributed random value;
the random value is a normalized random value; and
the given respective noise value is a Gaussian distribution value.

13. The computing device of claim 12, wherein:
the given respective hash value is generated using a SHA-256 hash function;
the random value is generated using a SHA-256 hash function; and
the Gaussian distribution value is based on a mean of zero and a standard deviation of two.

14. The computing device of claim 8, wherein adjusting a given record of the one or more records based at least in part on the respective noise value to produce the corresponding adjusted record comprises:
performing at least one operation on the given record based at least in part on the respective noise value and a type of the given record.

## Patentansprüche

1. Verfahren (400) zur Förderung der Privatsphäre bei der Bereitstellung von Abfrageergebnissen, wobei das Verfahren durch eine Rechenvorrichtung umfasst:
Empfangen (402) mindestens einer Abfrage, die (i) eine eindeutige Kennung (ID), die einer Softwareanwendung zugeordnet ist, (ii) ein Datum und (iii) mindestens einen Parameter umfasst;
Erzeugen (404) von Abfrageergebnissen auf der Grundlage der Abfrage, wobei die Abfrageergebnisse einen oder mehrere Datensätze umfassen;
Hinzufügen einer neuen Sammlung von Zufallsstartwerten zu einer bestehenden Vielzahl von Sammlungen von Zufallsstartwerten zu Beginn eines Datumsbereichs, wobei jede Sammlung einem Datumsbereich entspricht;
Auswählen einer bestimmten Sammlung von Zufallsstartwerten aus der Vielzahl von Sammlungen von Zufallsstartwerten, deren Datumsbereich dem in der Abfrage angegebenen Datum entspricht; Erhalten (406) eines Zufallsstartwerts aus der ausgewählten bestimmten Sammlung von Zufallsstartwerten, der mit der eindeutigen ID übereinstimmt;
Erzeugen (408) eines jeweiligen Hashwerts für jeden der einen oder mehreren Datensätze auf der Grundlage (i) der eindeutigen ID, (ii) des Zufallsstartwerts und (iii) mindestens eines Aspekts des Datensatzes;
Erzeugen (410) entsprechender Rauschwerte für die jeweiligen Hash-Werte;
Anpassen (412) jedes Datensatzes der einen oder mehreren Datensätze zumindest teilweise auf der Grundlage des jeweiligen Rauschwerts, um einen entsprechenden angepassten Datensatz zu erzeugen; und
Veranlassen (414), dass Informationen, die zumindest teilweise auf dem einen oder den mehreren entsprechenden angepassten Datensätzen basieren, in eine Benutzeroberfläche (UI) aufgenommen werden, die auf einer Anzeigevorrichtung ausgegeben wird.

2. Verfahren nach Anspruch 1, wobei das Erhalten des Zufallsstartwerts umfasst:
Zuweisen der eindeutigen ID der Softwareanwendung zu einem Dividendenwert;
Zuweisen einer Anzahl von Zufallsstartwerten in der bestimmten Sammlung von Zufallsstartwerten zu einem Divisorwert; und
Durchführen einer Modulo-Operation mit dem Dividendenwert und dem Divisorwert, wobei ein Rest der Modulo-Operation einer Position des Zufallssamenwerts relativ zu anderen Zufallssamenwerten in der bestimmten Sammlung von Zufallssamenwerten entspricht.

3. Verfahren nach Anspruch 1, wobei für einen gegebenen Datensatz der einen oder mehreren Datensätze der mindestens eine Aspekt umfasst:
einen Metriknamen, der dem gegebenen Datensatz entspricht;
einen Datumswert, der dem gegebenen Datensatz entspricht;
einen Periodenwert, der dem gegebenen Datensatz entspricht;
einen Gruppierungssatzwert, der dem gegebenen Datensatz entspricht; oder
eine Kombination davon.

4. Verfahren nach Anspruch 1, wobei das Erzeugen eines gegebenen jeweiligen Rauschwerts für einen gegebenen jeweiligen Hashwert umfasst:
Erzeugen eines Zufallswerts auf der Grundlage (i) des gegebenen jeweiligen Hashwerts und (ii) eines Personalisierungswerts, der zumindest teilweise auf der eindeutigen ID basiert; und
Verwenden des Zufallswerts, um den gegebenen jeweiligen Rauschwert zu erhalten.

5. Verfahren nach Anspruch 4, wobei:
der jeweilige vorgegebene Hashwert ein gleichmäßig verteilter Zufallswert ist;
der Zufallswert ein normalisierter Zufallswert ist; und
der jeweilige vorgegebene Rauschwert ein Gaußverteilungswert ist.

6. Verfahren nach Anspruch 5, wobei:
der jeweilige vorgegebene Hashwert unter Verwendung einer SHA-256-Hashfunktion erzeugt wird;
der Zufallswert unter Verwendung einer SHA-256-Hash-Funktion erzeugt wird; und
der Gaußsche Verteilungswert basiert auf einem Mittelwert von Null und einer Standardabweichung von zwei.

7. Verfahren nach Anspruch 1, wobei das Anpassen eines bestimmten Datensatzes des einen oder der mehreren Datensätze zumindest teilweise auf der Grundlage des jeweiligen Rauschwerts, um den entsprechenden angepassten Datensatz zu erzeugen, umfasst:
Durchführen mindestens einer Operation an dem gegebenen Datensatz, die zumindest teilweise auf dem jeweiligen Rauschwert und einem Typ des gegebenen Datensatzes basiert.

8. Rechenvorrichtung (500), die so konfiguriert ist, dass sie die Privatsphäre bei der Bereitstellung von Abfrageergebnissen fördert, wobei die Rechenvorrichtung umfasst:
mindestens einen Prozessor (502); und
mindestens einen Speicher, der Befehle speichert, die, wenn sie von dem mindestens einen Prozessor ausgeführt werden, die Rechenvorrichtung veranlassen, Schritte auszuführen, die Folgendes umfassen:
Empfangen mindestens einer Abfrage, die (i) eine eindeutige Kennung (ID), die einer Softwareanwendung zugeordnet ist, (ii) ein Datum und (iii) mindestens einen Parameter umfasst;
Erzeugen von Abfrageergebnissen auf der Grundlage der Abfrage, wobei die Abfrageergebnisse einen oder mehrere Datensätze umfassen;
Hinzufügen einer neuen Sammlung von Zufallsstartwerten zu einer bestehenden Vielzahl von Sammlungen von Zufallsstartwerten zu Beginn eines Datumsbereichs, wobei jede Sammlung einem Datumsbereich entspricht;
Auswählen einer bestimmten Sammlung von Zufallsstartwerten aus der Vielzahl von Sammlungen von Zufallsstartwerten, deren Datumsbereich dem in der Anfrage angegebenen Datum entspricht;
Erhalten eines Zufallsstartwerts aus der ausgewählten bestimmten Sammlung von Zufallsstartwerten, der der eindeutigen ID entspricht;
Erzeugen eines jeweiligen Hashwerts für jeden der einen oder mehreren Datensätze auf der Grundlage (i) der eindeutigen ID, (ii) des Zufallsstartwerts und (iii) mindestens eines Aspekts des Datensatzes;
Erzeugen entsprechender Rauschwerte für den jeweiligen Hashwert;
Anpassen jedes Datensatzes der einen oder mehreren Datensätze zumindest teilweise auf der Grundlage des jeweiligen Rauschwerts, um einen entsprechenden angepassten Datensatz zu erzeugen; und
Veranlassen, dass Informationen, die zumindest teilweise auf dem einen oder den mehreren entsprechenden angepassten Datensätzen basieren, in eine Benutzeroberfläche (UI) aufgenommen werden, die auf einer Anzeigevorrichtung ausgegeben wird.

9. Rechenvorrichtung nach Anspruch 8, wobei das Erhalten des Zufallsstartwerts umfasst:
Identifizieren einer jeweiligen Sammlung von Zufallsstartwerten, die dem Datum entsprechen;
Zuweisen der eindeutigen ID der Softwareanwendung zu einem Divisorwert;
Zuweisen einer Anzahl von Zufallsstartwerten in der jeweiligen Sammlung von Zufallsstartwerten zu einem Divisorwert; und
Durchführen einer Modulo-Operation mit dem Dividendenwert und dem Divisorwert, wobei ein Rest der Modulo-Operation einer Position des Zufallswerts relativ zu anderen Zufallswertsamen in der bestimmten Sammlung von Zufallswertsamen entspricht.

10. Rechenvorrichtung nach Anspruch 8, wobei für einen gegebenen Datensatz der einen oder mehreren Datensätze der mindestens eine Aspekt umfasst:
einen Metriknamen, der dem gegebenen Datensatz entspricht;
einen Datumswert, der dem gegebenen Datensatz entspricht;
einen Periodenwert, der dem gegebenen Datensatz entspricht;
einen Gruppierungssatzwert, der dem gegebenen Datensatz entspricht; oder
eine Kombination davon.

11. Rechenvorrichtung nach Anspruch 8, wobei das Erzeugen eines gegebenen jeweiligen Rauschwerts für einen gegebenen jeweiligen Hashwert umfasst:
Erzeugen eines Zufallswerts auf der Grundlage (i) des gegebenen jeweiligen Hashwerts und (ii) eines Personalisierungswerts, der zumindest teilweise auf der eindeutigen ID basiert; und
Verwenden des Zufallswerts, um den gegebenen jeweiligen Rauschwert zu erhalten.

12. Rechenvorrichtung nach Anspruch 11, wobei:
der jeweilige Hashwert ein gleichmäßig verteilter Zufallswert ist;
der Zufallswert ein normalisierter Zufallswert ist; und
der jeweilige vorgegebene Rauschwert ein Gaußverteilungswert ist.

13. Rechenvorrichtung nach Anspruch 12, wobei:
der jeweilige Hashwert unter Verwendung einer SHA-256-Hashfunktion erzeugt wird;
der Zufallswert unter Verwendung einer SHA-256-Hash-Funktion erzeugt wird; und
der Gaußsche Verteilungswert auf einem Mittelwert von Null und einer Standardabweichung von zwei basiert.

14. Rechenvorrichtung nach Anspruch 8, wobei das Anpassen eines gegebenen Datensatzes des einen oder der mehreren Datensätze zumindest teilweise auf der Grundlage des jeweiligen Rauschwerts, um den entsprechenden angepassten Datensatz zu erzeugen, umfasst:
Durchführen mindestens einer Operation an dem gegebenen Datensatz, zumindest teilweise basierend auf dem jeweiligen Rauschwert und einem Typ des gegebenen Datensatzes.

## Revendications

1. Un procédé (400) pour favoriser la confidentialité lors de la délivrance de résultats d'une requête, le procédé comprenant, par un dispositif informatique :
la réception (402) d'au moins une requête qui comprend (i) un identifiant (ID) unique associé à une application logicielle, (ii) une date, et (iii) au moins un paramètre ;
la génération (404) de résultats de requête sur la base de la requête, les résultats de requête comprenant un ou plusieurs enregistrements ;
l'ajout, à un commencement d'une plage de dates, d'une nouvelle collection de valeurs aléatoires de germe à une pluralité existante de collections de valeurs aléatoires de germe, chaque collection correspondant à une plage de dates ;
la sélection d'une collection particulière de valeurs aléatoires de germe, de la pluralité de collections de valeurs aléatoires de germe, dont la plage de dates correspond à la date donnée dans la requête ;
l'obtention (406) d'une valeur aléatoire de germe, à partir de la collection particulière sélectionnée de valeurs aléatoires de germe, qui correspond à l'ID unique ;
la génération (408), pour chacun des un ou plusieurs enregistrements, d'une valeur de hachage respective basée sur (i) l'ID unique, (ii) la valeur aléatoire de germe, et (iii) au moins un aspect de l'enregistrement ;
la génération (410) de valeurs de bruit respectives pour les valeurs de hachage respectives ;
l'ajustement (412) de chaque enregistrement des un ou plusieurs enregistrements au moins en partie sur la base de la valeur de bruit respective, pour produire un enregistrement ajusté correspondant ; et
faire en sorte (414) qu'une information au moins en partie basée sur les un ou plusieurs enregistrements ajustés correspondants soit incluse dans une interface utilisateur (UI) qui est délivrée en sortie sur un dispositif d'affichage.

2. Le procédé de la revendication 1, dans lequel l'obtention de la valeur aléatoire de germe comprend :
l'attribution de l'ID unique de l'application logicielle à une valeur de dividende ;
l'attribution d'un nombre de valeurs aléatoires de germe de la collection particulière de valeurs aléatoires de germe à une valeur de diviseur ; et
l'exécution d'une opération modulo sur la valeur de dividende et la valeur de diviseur, un reste de l'opération modulo correspondant à une position de la valeur aléatoire de germe par rapport aux autres valeurs aléatoires de germe de la collection particulière de valeurs aléatoires de germe.

3. Le procédé de la revendication 1, dans lequel, pour un enregistrement donné des un ou plusieurs enregistrements, l'au moins un aspect comprend :
un nom de métrique qui correspond à l'enregistrement donné ;
une valeur de date qui correspond à l'enregistrement donné ;
une valeur de période qui correspond à l'enregistrement donné ;
une valeur d'ensemble de regroupement qui correspond à l'enregistrement donné ; ou
certaine combinaison des précédentes.

4. Le procédé de la revendication 1, dans lequel la génération d'une valeur de bruit respective donnée pour une valeur de hachage respective donnée comprend :
la génération d'une valeur aléatoire basée sur (i) la valeur de hachage respective donnée, et (ii) une valeur de personnalisation qui est au moins en partie basée sur l'ID unique ; et
l'utilisation de la valeur aléatoire pour obtenir la valeur de bruit respective donnée.

5. Le procédé de la revendication 4, dans lequel :
la valeur de hachage respective donnée est une valeur aléatoire uniformément distribuée ;
la valeur aléatoire est une valeur aléatoire normalisée ; et
la valeur de bruit respective donnée est une valeur à distribution gaussienne.

6. Le procédé de la revendication 5, dans lequel :
la valeur de hachage respective donnée est générée à l'aide d'une fonction de hachage SHA-256 ;
la valeur aléatoire est générée à l'aide d'une fonction de hachage SHA-256 ; et
la valeur à distribution gaussienne est basée sur une moyenne de zéro et un écart-type de deux.

7. Le procédé de la revendication 1, dans lequel l'ajustement d'un enregistrement donné des un ou plusieurs enregistrements basés au moins en partie sur la valeur de bruit respective pour produire l'enregistrement ajusté correspondant comprend :
l'exécution d'au moins une opération sur l'enregistrement donné au moins en partie sur la base de la valeur de bruit respective et d'un type de l'enregistrement donné.

8. Un dispositif informatique (500) configuré pour favoriser la confidentialité lors de la délivrance de résultats d'une recherche, le dispositif informatique comprenant :
au moins un processeur (502) ; et
au moins une mémoire stockant des instructions qui, lorsqu'elles sont exécutées par l'au moins un processeur, font en sorte que le dispositif informatique exécute des étapes qui comprennent :
la réception d'au moins une requête qui comprend (i) un identifiant (ID) unique associé à une application logicielle, (ii) une date, et (iii) au moins un paramètre ;
la génération de résultats de requête sur la base de la requête, les résultats de requête comprenant un ou plusieurs enregistrements ;
l'ajout, à un commencement d'une plage de dates, d'une nouvelle collection de valeurs aléatoires de germe à une pluralité existante de collections de valeurs aléatoires de germe, chaque collection correspondant à une plage de dates ;
la sélection d'une collection particulière de valeurs aléatoires de germe, de la pluralité de collections de valeurs aléatoires de germe, dont la plage de dates correspond à la date donnée dans la requête ;
l'obtention d'une valeur aléatoire de germe, à partir de la collection particulière sélectionnée de valeurs aléatoires de germe, qui correspond à l'ID unique ;
la génération, pour chacun des un ou plusieurs enregistrements, d'une valeur de hachage respective basée sur (i) l'ID unique, (ii) la valeur aléatoire de germe, et (iii) au moins un aspect de l'enregistrement ;
la génération de valeurs de bruit respectives pour les valeurs de hachage respectives ;
l'ajustement de chaque enregistrement des un ou plusieurs enregistrements au moins en partie sur la base de la valeur de bruit respective, pour produire un enregistrement ajusté correspondant ; et
faire en sorte qu'une information au moins en partie basée sur les un ou plusieurs enregistrements ajustés correspondants soit incluse dans une interface utilisateur (UI) qui est délivrée en sortie sur un dispositif d'affichage.

9. Le dispositif informatique de la revendication 8, dans lequel l'obtention de la valeur aléatoire de germe comprend :
l'identification d'une collection respective de valeurs aléatoires de germe qui correspondent à la date ;
l'attribution de l'ID unique de l'application logicielle à une valeur de dividende ;
l'attribution d'un nombre de valeurs aléatoires de germe de la collection respective de valeurs aléatoires de germe à une valeur de diviseur ; et
l'exécution d'une opération modulo sur la valeur de dividende et la valeur de diviseur, un reste de l'opération modulo correspondant à une position de la valeur aléatoire de germe par rapport aux autres valeurs aléatoires de germe de la collection particulière de valeurs aléatoires de germe.

10. Le dispositif informatique de la revendication 8, dans lequel, pour un enregistrement donné des un ou plusieurs enregistrements, l'au moins un aspect comprend :
un nom de métrique qui correspond à l'enregistrement donné ;
une valeur de date qui correspond à l'enregistrement donné ;
une valeur de période qui correspond à l'enregistrement donné ;
une valeur d'ensemble de regroupement qui correspond à l'enregistrement donné ; ou
certaine combinaison des précédentes.

11. Le dispositif informatique de la revendication 8, dans lequel la génération d'une valeur de bruit respective donnée pour une valeur de hachage respective donnée comprend :
la génération d'une valeur aléatoire basée sur (i) la valeur de hachage respective donnée, et (ii) une valeur de personnalisation qui est au moins en partie basée sur l'ID unique ; et
l'utilisation de la valeur aléatoire pour obtenir la valeur de bruit respective donnée.

12. Le dispositif informatique de la revendication 11, dans lequel :
la valeur de hachage respective donnée est une valeur aléatoire uniformément distribuée ;
la valeur aléatoire est une valeur aléatoire normalisée ; et
la valeur de bruit respective donnée est une valeur à distribution gaussienne.

13. Le dispositif informatique de la revendication 12, dans lequel :
la valeur de hachage respective donnée est générée à l'aide d'une fonction de hachage SHA-256 ;
la valeur aléatoire est générée à l'aide d'une fonction de hachage SHA-256 ; et
la valeur à distribution gaussienne est basée sur une moyenne de zéro et un écart-type de deux.

14. Le dispositif informatique de la revendication 8, dans lequel l'ajustement d'un enregistrement donné des un ou plusieurs enregistrements basés au moins en partie sur la valeur de bruit respective pour produire l'enregistrement ajusté correspondant comprend :
l'exécution d'au moins une opération sur l'enregistrement donné au moins en partie sur la base de la valeur de bruit respective et d'un type de l'enregistrement donné.
